Europäisches Patentamt

European Patent Office

Office européen des brevets

(11) Veröffentlichungsnummer: **0 496 918 A1**

## EUROPÄISCHE PATENTANMELDUNG

(21) Anmeldenummer: **91101295.3**

(51) Int. Cl.5: **G01P 3/481**

(22) Anmeldetag: **31.01.91**

(43) Veröffentlichungstag der Anmeldung:
**05.08.92 Patentblatt 92/32**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Fischer, Reinhard, Dipl.-Ing.**
**Dammweg 3**
**W-8011 Grosshelfendorf(DE)**
Erfinder: **Vogt, Günther**
**Bel Air**
**CH-1180 Rolle(CH)**
Erfinder: **Wier, Manfred, Dr.-Ing**
**Ahornweg 2**
**W-8411 Wenzenbach(DE)**

(54) **Anordnung zur Gewinnung von Impulssignalen beim Vorbeilauf von Markierungen eines Geberteils.**

(57) Die Erfindung bezieht sich auf Geberteile (10, 11), die von zwei Sensoren (21, 22) abgetastet werden, wobei deren Differenzsignal ausgewertet wird. Die beiden Sensoren (21, 22) sind bezogen auf die Bewegungsrichtung der Markierungen quer zueinander angeordnet und die Markierungen sind so verteilt, daß immer einem der Sensoren (21, 22) eine Markierung gegenübersteht, während dem anderen keine gegenübersteht. Damit liegt auch bei besonders breiten Markierungen immer ein auswertbares Differenzsignal vor.

FIG 3

Die Erfindung betrifft eine Anordnung zur Gewinnung von Impulssignalen beim Vorbeilauf von Markierungen eines Geberteils gemäß Oberbegriff von Anspruch 1.

Solche Anordnungen sind für eine Vielzahl von Anwendungen bekannt, so zum Beispiel in der Automobilelektronik für die Drehzahl und Positionserfassung der Kurbelwelle und der Nockenwelle.

Dazu sind mit der Kurbelwelle und der Nockenwelle entsprechende Geberteile mit Markierungen in Form von ferromagnetischen Zähnen verbunden.

Ein Abtastkopf tastet diese Zähne ab, und liefert beim Vorbeilauf jedes solchen Zahns ein Impulssignal. Aus diesen Impulssignalen können dann die entsprechenden Drehzahl- bzw. Positionsinformationen abgeleitet werden.

Als Abtastkopf haben sich Anordnungen mit zwei Sensoren als günstig erwiesen. Die beiden Sensoren sind dabei in Laufrichtung der Zähne gesehen im Abstand hintereinander angeordnet. Dementsprechend wird bei einem ankommenden Zahn erst einer der beiden Sensoren ansprechen, während der andere noch nicht anspricht. Umgekehrt wird, wenn der Zahn vorbeigelaufen ist der zuerst erreichte Sensor schon nicht mehr ansprechen, während der später erreichte Sensor noch anspricht. Eine Auswerteeinheit bildet aus den beiden Sensorsignalen ein Differenzsignal und kann daraus die ansteigende und die abfallende Flanke jedes Zahnes erkennen. Durch diese Differenzsignalauswertung können Störeinflüsse kompensiert werden. Die Anwendung von solchen Abtastköpfen mit Differenzsignalauswertung ist z.B. in dem HL-Anwendungsbericht der Firma Siemens beschrieben (TD 11/9011).

Die Auswerteeinheit liefert ein Signal solange ein Differenzsignal vorliegt. Ist daher eine Lücke oder ein Zahn länger als der Abstand der beiden Sensoren, so liegt kein Differenzsignal vor solange beide Sensoren den Zahn oder die Lücke abtasten. Dies ist z.B. der Fall bei Nockenwellengebern, die nur einen über die Hälfte ihres Umfangs erstreckten Zahn und sonst eine Lücke aufweisen. Die bekannte Anordnung kann an diesem Nockenwellengeber jeweils nur den Übergang Zahn/Lücke bzw. Lücke/Zahn erfassen. Beim Nockenwellengeber muß aber die Aussage möglich sein, ob dem Abtastkopf gerade der Zahn oder die Lücke an irgendeiner beliebigen Stelle gegenüber steht.

Die Aufgabe der vorliegenden Erfindung besteht daher darin, eine solche Anordnung so weiterzubilden, daß auch eine solche Aussage möglich ist.

Die erfindungsgemäße Lösung ist im Anspruch 1 gekennzeichnet. Vorteilhafte Weiterbildungen finden sich in den Unteransprüchen.

Die erfindungemäße Lösung geht von der Überlegung aus, daß um immer ein definiertes Ausgangssignal zu haben, an jeder Position des Geberteils ein Differenzsignal vorliegen muß. Dazu wird der Abtastkopf gedreht, so daß die beiden Sensoren bezüglich der Bewegungsrichtung der Zähne quer zueinander angeordnet sind. Das Geberteil wird zusätzlich so geändert, daß bestimmte Zähne nur von dem einen Sensor erfaßt werden und andere Zähne nur von dem anderen Sensor. Um dabei immer ein Differenzsignal zu haben, muß dem einen Sensor gerade ein Zahn gegenübersteht, wenn dem anderen gerade eine Lücke gegenübersteht und umgekehrt.

Eine einfache Ausführungsform eines solchen Geberteils sind zwei gleiche auf der gleichen Welle verdreht aufeinander gesetzte Zahnräder, wobei von der Seite in Richtung der Welle gesehen die Zähne des einen Zahnrads die Lücken des anderen Zahnrads verdecken. Dementsprechend tastet dann einer der beiden Sensoren nur das eine und der andere Sensor nur das andere Zahnrad ab.

Die Erfindung wird anhand der Figuren näher erläutert. Dabei zeigen:

Figur 1      eine Anordnung eines Geberteils und eines Abtastkopfes gemäß dem Stand der Technik,

Figur 2      eine erfindungsgemäße Anordnung eines Geberteils und eines Abtastkopfes und

Figur 3      eine weitere Ausführungsform einer erfindungsgemäßen Anordnung.

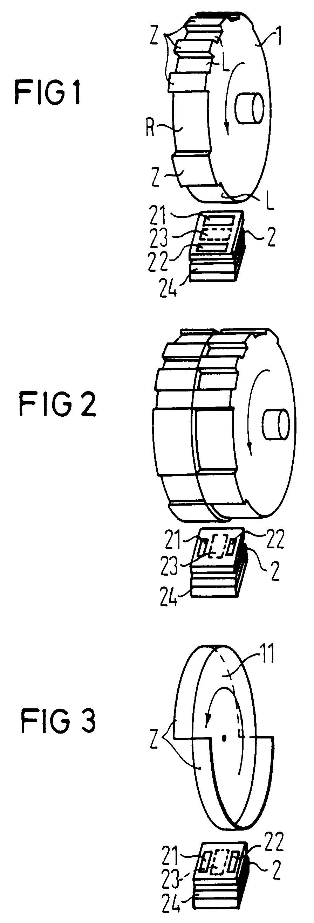

In Figur 1 ist mit 1 ein Geberteil und mit 2 ein Abtastkopf bezeichnet. Das Geberteil 1 ist ein ferromagnetischen Zahnrad mit über den Umfang verteilten Zähnen Z und Lücken L. Es ist über eine Welle mit einer in der Figur nicht dargestellten Kurbelwelle eines Kraftfahrzeugs verbunden und dient zu deren Drehzahl und Positionserfassung.

Zu diesem Zweck tastet der Abtastkopf 2 die Zähne Z ab. Er erzeugt bei jedem vorbeilaufenden Zahn Z ein Impulssignal. Der Abtastkopf 2 ist an einem nicht dargestellten Motorsteuergerät angeschlossen, das durch zeitliche Bewertung der Impulssignale die Drehzahlinformation bildet. Für die Postionserfassung zählt die Motorsteuerung die Impulssignale ausgehend von einer Referenzposition R. Diese Referenzposition R ist für die Motorsteuerung dadurch erkennbar, daß dort auf dem Geberteil 1 ein Zahn weggelassen ist.

Der Abtastkopf 2 besteht aus einem Einchip-Differenz-Hall-IC (TLE 4920 der Firma Siemens) sowie einem Permanentmagneten 24. Auf dem IC sind im wesentlichen zwei Hall-Sensoren 21 und 22 und eine Auswerteeinheit 23 angeordnet. Die beiden Hall-Sensoren 21 und 22 geben jeweils ein Sensorsignal ab, wenn Ihnen einer der Zähne Z gegenübersteht. Die Auswerteeinheit 23 wertet das Differenzsignal der beiden Hall-Sensoren 21, 22 aus und gibt jeweils beim Wechsel von einem Zahn Z auf eine Lücke L ein Impulssignal ab. Die genaue Funktion des ICs ist in dem HL-Anwendungsbericht der Firma Siemens PD 119011 beschrieben.

Weitere Informationen bezüglich dieses ICs liefert die Firmenschrift TLE 4920 F/G, Preliminary Data, Seiten 1/24 bis 24/24.

Wie aus Figur 1 ersichtlich ist der IC so angeordnet, daß die beiden Hall-Sensoren 21, 22 in der eingezeichneten Drehrichtung des Geberteils 1 gesehen im Abstand voneinander hintereinander liegen. Da die Auswerteeinheit 23 auf das Differenzsignal zwischen den beiden Sensorsignalen anspricht, entsteht also immer dann ein undefinierter Zustand, wenn ein Zahn Z oder eine Lücke L breiter ist als der Abstand zwischen den Hall-Sensoren 21, 22 auf dem IC. Bei dem dargestellten Geberteil 1 ist dies bei der Referenzposition R der Fall. Diese Referenzposition R wird daher indirekt dadurch erkannt, daß in der zeitlichen Abfolge der Imulssignale durch den fehlenden Zahn ein Impulssignal fehlt.

Die Figur 2 zeigt nun eine erfindungsgemäße Anordnung, die auch bei der Referenzposition R ein definiertes Impulssignal liefert. Die Betriebssicherheit der gesamten Motorsteuerung wird dadurch deutlich erhöht, da damit für die wichtige Referenzposition R ein definiertes, direktes Signal vorliegt.

Gemäß Figur 2 besteht ein Geberteil 10 dabei aus zwei auf der gleichen Welle aneinander befestigten ferromagnetischen Zahnrädern. Jedes der Zahnräder weist dort wo das andere Zahnrad einen Zahn Z hat eine gleichbreite Lücke L auf und wo das andere Zahnrad eine Lücke L hat einen gleichbreiten Zahn Z. Ansonsten sind die beiden Zahnräder gleich. Aus Übersichtlichkeitsgründen sind in Figur 2 die Zähne Z und die Lücken L sowie die Referenzposition R nicht nochmals mit Bezugszeichen versehen. Diese Bezugszeichen können analog aus Figur 1 übertragen werden.

Der Abstastkopf 2 ist abgesehen von seiner Anordnung identisch dem aus Figur 1. Er ist hier um 90° gedreht, so daß die beiden Hall-Sensoren 21, 22 bezüglich der Laufrichtung des Geberteils 10 quer zueinander angeordnet sind. Dadurch tastet der Hall-Sensor 21 nur die Zähne Z des in Figur 2 links liegenden Zahnrads und der Hall-Sensor 22 nur die Zähne Z des rechts liegenden Zahnrades ab. Damit liegt an jeder beliebigen Position des Geberteils 10 ein Differenzsignal vor, da wie erwähnt jedem Zahn Z eine Lücke L benachbart ist und umgekehrt jeder Lücke L ein Zahn Z. So liefert also immer einer der beiden Hall-Sensoren 21, 22 ein Sensorsignal während der andere keines liefert. Das Differenzsignal wechselt so auch nach jedem Zahn Z sein Vorzeichen und bietet damit ein zusätzliches Kriterium für einen Zahnwechsel, wodurch sich die Auswertesicherheit weiter erhöht.

Figur 3 zeigt schließlich ein weiteres Ausführungsbeispiel eines Geberteils 11. Dieses Geberteil 11 hat nur zwei Zähne Z, die sich jeweils über die Hälfte des Umfangs erstrecken. Es ist ein einfaches Blechprägeteil in Form einer kreisrunden Scheibe, deren Rand für die Zähne Z rechtwinklig nach rechts und links umgebördelt ist. Die Ausführung mit nur zwei Zähnen Z dient als Nockenwellengeber zur Erkennnung der Periodizität von Mehrzylindermaschinen. Es versteht sich jedoch, daß ein solches Geberteil 11 auch eine Vielzahl von Zähnen Z, wie z.B. bei den Ausführungsformen der Figuren 1 und 2, aufweisen könnte.

Die Ausführungsform und die Anordnung des Abtastkopfes 2 ist gleich der aus Figur 2. Der Hall-Sensor 21 tastet dabei nur den in Figur 3 nach links abgebogenen Zahn Z ab und der Hall-Sensor 22 nur den nach rechts abgebogenen Zahn Z. Dementsprechend liegt auch dabei an jeder beliebigen Position des Geberteils 11 ein definiertes Differenzsignal vor. Das Vorzeichen des Differenzsignals gibt an, welcher der beiden Zähne Z gerade dem Abtastkopf 2 gegenübersteht.

Bei der Ausführungsform des Geberteils 10 gemäß Figur 2 mißt immer einer der Hall-Sensoren 21, 22 gegen einen Zahn Z während der andere gegen eine Lücke L mißt. Beim Geberteil 11 gemäß Figur 3 dagegen mißt jeweils einer der Hall-Sensoren 21, 22 gegen einen Zahn Z während der andere gegen Luft mißt. Dadurch erhöht sich das Differenzsignal und verbessert so das Signalrauschverhältnis.

Die Erfindung wurde anhand der Figuren 1 bis 3 anhand von ferromagnetischen Zahnrädern beschrieben, die mit Hall-Sensoren abgetastet werden. Im Rahmen der Erfindung könnten aber auch beliebige andere geeignete Sensoren eingesetzt werden, wie z.B. Feldplatten, induktive oder kapazitive Sensoren. Auch anders geartete Geberteile mit andersartigen Markierungen sind möglich, wie z.B. optische Markierungen mit dementsprechenden optischen Abtastköpfen.

**Patentansprüche**

1. Anordnung zur Gewinnung von Impulssignalen beim Vorbeilauf von Markierungen eines Geberteils (10, 11)

   - mit einem Abtastkopf (2), der zwei im Abstand voneinander angebrachte Sensoren (21, 22) aufweist, die die Markierungen abtasten und ein Sensorsignal abgeben, wenn sie einer Markierung gegenüberstehen,

   - mit einer Auswerteeinheit (23), die beim Auftreten eines Differenzsignals zwischen den beiden Sensorsignalen ein Impulssignal bildet,
**dadurch gekennzeichnet,**
daß die beiden Sensoren (21, 22) bezogen auf die Bewegungsrichtung der Markierungen quer zueinander angeordnet sind und daß die Markierungen auf dem Geberteil (1, 10, 11) so verteilt sind, daß in jeder Position des Geberteils (1, 10, 11) immer einem der Sensoren eine Markierung gegenübersteht, während dem anderen keine Markierung gegenübersteht.

2. Anordnung nach Anspruch 1,
   **dadurch gekennzeichnet,**
   daß das Geberteil (10) aus zwei Zahnrädern besteht, deren Zähne die Markierungen bilden und die so verdreht axial aufeinander befestigt sind, daß von der Seite gesehen jeder Zahn des einen Zahnrads eine Lücke des anderen Zahnrads überdeckt und daß jeder der Sensoren (21, 22) nur eines der Zahnräder abtastet.

3. Anordnung nach Anspruch 1,
   **dadurch gekennzeichnet,**
   daß das Geberteil (11) eine kreisrunde Scheibe ist, deren Rand die Markierungen bildet, indem er abschnittsweise nach der einen bzw. der anderen Seite abgebogen ist und daß jeder der beiden Sensoren (21, 22) jeweils nur die auf dieselbe Seite abgebogenen Markierungen abtastet.

4. Anordnung nach Anspruch 2 oder 3,
   **dadurch gekennzeichnet,**
   daß das Geberteil (10, 11) ein Nockenwellengeberteil eines Kraftfahrzeuges ist, wobei jedem der Sensoren (21, 22) nur eine über die Hälfte des Umfangs ausgedehnte Markierung zugeordnet ist.

5. Anordnung nach Anspruch 2 oder 3,
   **dadurch gekennzeichnet,**
   daß die Markierungen aus ferromagnetischem Material bestehen und die Sensoren (21, 22) magnetisch empfindlich sind.

6. Anordnung nach Anspruch 5
   **dadurch gekennzeichnet,**
   daß der Abtastkopf (2) einen Einchip-Differenz-Hall-IC aufweist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 871 215 (G.W. PRATT, Jr. et al.) <br> * Spalte 6, Zeilen 9-63; Spalte 8, Zeilen 9-30; Figuren 2,3 * | 1 | G 01 P 3/481 |
| Y | --- | 2,5,6 | |
| Y | DE-A-2 711 593 (J. HÜBNER FABRIK) <br> * Seite 4, Zeilen 10-24; Figuren 1,3 * <br> --- | 2 | |
| Y | DE-U-8 909 677 (SIEMENS AG) <br> * Seite 3, Zeilen 7-12; Figur 3 * <br> --- | 5,6 | |
| A | DE-A-3 041 041 (KRAUSS-MAFFEI) <br> * Seite 6, Zeilen 8-17; Seite 9, Zeilen 6-12; Figuren 1,2 * <br> ----- | 1,2,4,5 | |

**RECHERCHIERTE SACHGEBIETE (Int. Cl.5)**

G 01 P

Der vorliegende Recherchenbericht wurde für alle Patentansprüche erstellt

| Recherchenort | Abschlußdatum der Recherche | Prüfer |
|---|---|---|
| DEN HAAG | 23-09-1991 | HANSEN P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)